# EUROPÄISCHE PATENTSCHRIFT

(11) **EP 1 232 348 B1**
(45) Veröffentlichungstag und Bekanntmachung des Hinweises auf die Patenterteilung: **18.01.2006**
(21) Anmeldenummer: 00985073.6
(22) Anmeldetag: 21.11.2000
(51) Int. Cl.: F16H 57/02, H02K 7/116

(54) **PLANETENGETRIEBE ZUM ANBAU AN EINEN ELEKTROMOTOR**
PLANETARY GEAR FOR MOUNTING ON AN ELECTROMOTOR
ENGRENAGE PLANETAIRE A MONTER SUR UN MOTEUR ELECTRIQUE

(30) Priorität: 25.11.1999 DE 19956789
(43) Veröffentlichungstag der Anmeldung: 21.08.2002
(73) Patentinhaber: ZF FRIEDRICHSHAFEN Aktiengesellschaft, 88038 Friedrichshafen (DE)
(72) Erfinder: KIRSCHNER, Tino, 88097 Eriskirch (DE)
(86) Internationale Anmeldenummer: PCT/EP2000/011582
(87) Internationale Veröffentlichungsnummer: WO 2001/038759

(56) Entgegenhaltungen:
- EP-A- 0 567 048
- EP-A- 1 048 877
- DE-A- 19 647 063
- DE-C- 19 808 184
- PATENT ABSTRACTS OF JAPAN vol. 1998, no. 09, 31. Juli 1998 (1998-07-31) & JP 10 112952 A (TSUBAKIMOTO CHAIN CO), 28. April 1998 (1998-04-28)

## Beschreibung

Die Erfindung betrifft ein Planetengetriebe zum Anbau an einen Elektromotor nach dem Oberbegriff des Hauptanspruchs.

Derartige Planetengetriebe finden vielfältige Anwendung in der Automatisierungstechnik sowie generell an Maschinen und Anlagen. Mit einem solchen Planetengetriebe, bei dem ein Sonnenrad von einer Abtriebswelle des Elektromotors antreibbar ist, ein Hohlrad im Gehäuse festgelegt ist und ein Planetenträger den Abtrieb bildet, sind durch Variation der Geometrie von Sonnen- und Planetenrädern sowie des Planetenträgers verschiedene Übersetzungen realisierbar, die typischerweise im Bereich von 4:1 bis 10:1 liegen.

Bedingt durch eine hohe Leistungsdichte können bereits geringe interne Verlustleistungen unerwünschte, hohe Temperaturen verursachen. Aufgrund der kompakten Bauform kann die Verlustwärme oftmals nicht im gewünschten Ausmaß abgeführt werden. Hohe Temperaturen wirken sich negativ auf die Lebensdauer aus. Ein großer Teil der Verlustleistung wird durch die Abdichtung und Lagerung der schnelldrehenden, eingangsseitigen Sonnenradwelle verursacht.

Ein gattungsgemäßes Getriebe ist beispielsweise in der DE 198 08 184 C1 offenbart. Die Sonnenradwelle dieses bekannten Planetengetriebes ist zur Aufnahme einer Abtriebswelle des Elektromotors in einem Aufnahmebereich mit vergrößertem Durchmesser hohl ausgebildet. Die Sonnenradwelle ist gegenüber dem Gehäuse mit einem Radialdichtring abgedichtet. Die DE 196 47 063 A1 zeigt ein Planetengetriebe zum Anbau an einen Elektromotor, bei dem das Dichtungselement, welches die Sonnenradwelle gegenüber dem Gehäuse nach außen abdichtet, axial außerhalb des Aufnahmebereichs für die Abtriebswelle des Elektromotors in einem axialen Abschnitt der Sonnenradwelle mit gegenüber dem Aufnahmebereich reduziertem Außendurchmesser angeordnet ist.

Aus EP-A-0 567 048 ist folgendes bekannt: ein Getriebe zum Anbau an einen Elektromotor in Exzenter-Bauweise mit einer drehbaren Welle, auf der ein Lager angeordnet ist, und welche zur Aufnahme einer Abtriebswelle des Elektromotors in einem Aufnahmebereich hohl ausgebildet ist, wobei zwischen der Welle und einem Gehäuse ein Dichtungselement vorgesehen ist, wobei das Lager in einem durch das Dichtungselement nach außen abgedichteten Innenraum des Gehäuses angeordnet ist und ein Innenring des Lagers axial außerhalb des Aufhahmebereichs für die Abtriebswelle des Elektromotors auf einem axialen Abschnitt der Welle mit gegenüber dem Aufnahmebereich reduziertem Außendurchmesser angeordnet ist, wobei das Dichtungselement axial außerhalb des Aufnahmebereichs für die Abtriebswelle des Elektromotors in einem axialen Abschnitt der Welle mit gegenüber dem Aufnahmebereich reduziertem Außendurchmesser angeordnet ist. EP-A-0 567 048 zeigt weitere Getriebetypen, jedoch nicht mit der Anordnung wobei das Lager in einem durch das Dichtungselement nach außen abgedichteten Innenraum des Gehäuses angeordnet ist.

Der Erfindung liegt die Aufgabe zugrunde, ein gattungsgemäßes Planetengetriebe so weiterzubilden, daß die Verlustleistung minimiert ist. Außerdem soll das Planetengetriebe kurzbauend und kostengünstig herstellbar sein.

Diese Aufgabe wird durch die Gegenstände der unabhängigen Patentansprüche gelöst.

Bei einer Lösung ist ein Lager für die Sonnenradwelle vorhanden, dessen Innenring axial außerhalb des Aufnahmebereichs für die Abtriebswelle des Elektromotors auf einem axialen Abschnitt der Sonnenradwelle mit gegenüber dem Aufnahmebereich reduziertem Außendurchmesser angeordnet ist. Gegenüber einem Lager, welches im Aufnahmebereich der Sonnenradwelle oder direkt daran angrenzend angeordnet ist, kann ein solches Lager nach der auftretenden Belastung dimensioniert werden und braucht nicht überdimensioniert zu werden. Das kleinere Lager verursacht eine geringere Verlustleistung, ist kostengünstiger und leichter. Anstelle von zwei separaten Bauteilen für das Dichtungselement und das Lager kann natürlich auch ein Lager mit integriertem Dichtungselement verwendet werden.

In einer vorteilhaften Ausgestaltung dieser Lösung ist der Lageraußenring des Lagers für die Sonnenradwelle nicht im Gehäuse, sondern im Planetenträger angeordnet. Da der Planetenträger die selbe Drehrichtung aufweist wie die Sonnenradwelle, ist die am Lager anliegende Relativdrehzahl zwischen der Sonnenradwelle und dem Planetenträger geringer als die Relativdrehzahl zwischen Sonnenradwelle und Gehäuse. Hierdurch ist eine weitere Verminderung der Verlustleistung bzw. eine weitere Verbesserung des Getriebewirkungsgrades erreichbar.

Vorteile hinsichtlich einer kompakten Baugröße können dadurch erzielt werden, daß das Lager für die Sonnenradwelle radial innerhalb eines Planetenträgerlager-Innenrings und axial wenigstens teilweise innerhalb des vom Planetenträgerlager beanspruchten Bauraums angeordnet ist.

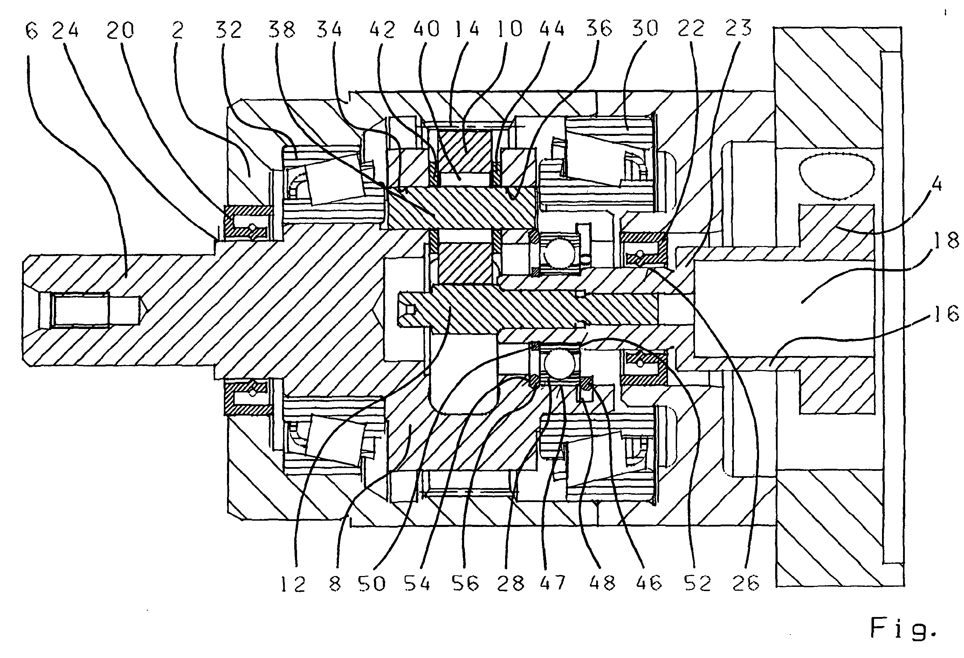

Weitere Lösungen und vorteilhafte Ausgestaltungen der Erfindung werden anhand der beiliegenden Figur erläutert, die einen Längsschnitt durch ein erfindungsgemäßes Planetengetriebe zeigt.

In der einzigen Figur ist mit 2 das Gehäuse, mit 4 die eingangsseitige Sonnenradwelle und mit 6 die Abtriebswelle eines erfindungsgemäßen Planetengetriebes bezeichnet. Die Abtriebswelle 6 dreht sich mit einem Planetenträger 8, auf dem mehrere Planetenräder 10 gleichmäßig verteilt drehbar gelagert sind. Die Planetenräder 10 sind in gleichzeitigem Zahneingriff mit einem mit der Sonnenradwelle 4 antreibbaren, zentralen Sonnenrad 12 und einem im Gehäuse 2 festgelegten Hohlrad 14.

Die Sonnenradwelle 4 weist zur Aufnahme einer nicht gezeigten Abtriebswelle eines Elektromotors einen hohl ausgebildeten Aufnahmebereich 16 auf, der sich axial auf die Länge einer zylindrischen Bohrung 18 in der Sonnenradwelle 4 erstreckt. Der mit Schmierstoff befüllte Innenraum des Gehäuses 2 ist durch zwei als Radialdichtringe 20, 22 ausgebildete Dichtungselemente nach außen abgedichtet. Die Radialdichtringe sind im Gehäuse 2 befestigt und zylindrischen Funktionsflächen 24, 26 der Abtriebs- bzw. Sonnenradwelle zugeordnet. Zwischen den Radialdichtringen und diesen Funktionsflächen tritt gleitende Reibung auf.

Der zwischen Gehäuse 2 und Sonnenradwelle 4 angeordnete Radialdichtring 22 ist außerhalb des Aufnahmebereichs 16 für die Abtriebswelle des Elektromotors in einem axialen Abschnitt der Sonnenradwelle mit gegenüber dem Aufnahmebereich reduziertem Außendurchmesser angeordnet. An der Funktionsfläche 26, deren Durchmesser geringer ist als der Durchmesser der Bohrung 18, treten nur sehr geringe Reibungsverluste auf, so daß ein hoher Wirkungsgrad erzielt wird und Probleme mit hohen Temperaturen vermieden werden. Zwischen dem Aufnahmebereich 16 und dem Ort des Radialdichtrings 22 weist die Sonnenradwelle eine Durchmesserstufe 23 auf.

Der Innenring des Lagers 28 für die Sonnenradwelle 4 ist ebenfalls außerhalb des Aufnahmebereichs 16 für die Abtriebswelle des Elektromotors in einem Bereich mit reduziertem Außendurchmesser angeordnet, so dass ein Lager kleiner Baugröße verwendet werden kann.
Der Durchmesser der Lageraufnahme auf der Sonnenradwelle ist ebenfalls kleiner als der Durchmesser der Bohrung 18.

Der Lageraußenring des Lagers 28 ist im Planetenträger 8 angeordnet, und zwar radial innerhalb des Innenrings eines Planetenträgerlagers 30. Das Lager 28 ist axial innerhalb des vom Planetenträgerlager 30 beanspruchten Bauraumes angeordnet, was eine kurze axiale Baulänge des Planetengetriebes ermöglicht. Für den Planetenträger 8 ist ein zweites Lager 32 vorgesehen, das wie das Lager 30 als Kegelrollenlager ausgebildet ist und mit diesem zusammen eine X-Anordnung bildet.

Im axialen Bauraum zwischen den Kegelrollenlagern 30, 32 weist der Planetenträger 8 beidseits jedes Planetenrades 10 durchgehende Bohrungen 34, 36 auf. Diese Bohrungen 34, 36 nehmen jeweils einen Planetenlagerbolzen 38 auf, auf dem das Planetenrad 10 mittels Zylinderrollen 40 drehbar gelagert ist. Der Planetenlagerbolzen 40 grenzt mit seinen Stirnflächen an die Lagerinnenringe der Planetenträgerlager 32, 34 an, wodurch er in vorteilhafter Weise und ohne weitere Maßnahmen gegen axiale Verschiebung gesichert ist. Beidseits jedes Planetenrades 10 sind auf dem Planetenlagerbolzen 38 ringscheibenförmige Anlaufscheiben angeordnet, die die axiale Bewegung des Planetenrades 10 begrenzen.

Das Lager 28 für die Sonnenradwelle 4 ist im Planetenträger 8 durch einen Sprengring 46 gegen axiale Verschiebung in eine Richtung gesichert. Zur Montage des Lagers 28 kann der Sprengring 46 vollständig in eine Ringnut 48 im Planetenträger gedrängt werden, welche axial an die den Lageraußenring aufnehmende Funktionsfläche 47 des Planetenträgers angrenzt. Sobald der Lageraußenring des Lagers 28 bei der Montage über den Bereich der Ringnut 48 hinweggeschoben wurde, schnappt der Sprengring 46 zusammen und sichert so den Lageraußenring gegen axiale Verschiebung. Der Lagerinnenring des Lagers 28 ist, begrenzt durch einen Sicherungsring 50 und eine Stufe 52 in der Sonnenradwelle 4, axial auf der Sonnenradwelle 4 festgelegt.

Zwischen der dem Sprengring 46 gegenüberliegenden Stirnfläche des Lageraußenrings des Lagers 28 und einer ringscheibenförmigen Funktionsfläche 54 des Planetenträgers 8 ist ein O-Ring 56 aus Gummi angeordnet, der als elastisches Ausgleichselement dient. Die Sonnenradwelle 4 ist somit gegenüber dem Planetenträger 8 und dem Gehäuse 2 in geringem Maße axial verschieblich gegen die Kraftwirkung des O-Rings 56. Auf diese Weise können Längenausdehnungen der Sonnenradwelle 4 und/oder der Abtriebswelle des Elektromotors infolge von Temperaturänderungen ausgeglichen werden. Alternativ hierzu ist es möglich, die Sonnenradwelle zum Gehäuse axial unverschieblich zu lagern und zwischen der Sonnenradwelle 4 und der Abtriebswelle des Elektromotors eine Federscheibenkupplung, wie sie beispielsweise in der nicht vorveröffentlichten DE 199 51 613 gezeigt ist, anzuordnen.

### Bezugszeichen

- 2: Gehäuse
- 4: Sonnenradwelle
- 6: Abtriebswelle
- 8: Planetenträger
- 10: Planetenrad
- 12: Sonnenrad
- 14: Hohlrad
- 16: Aufnahmebereich
- 18: Bohrung
- 20: Radialdichtring
- 22: Radialdichtring
- 23: Durchmesserstufe
- 24: Funktionsfläche
- 26: Funktionsfläche
- 28: Lager
- 30: Lager
- 32: Lager
- 34: Bohrung
- 36: Bohrung
- 38: Planetenlagerbolzen
- 40: Zylinderrollen
- 42: Anlaufscheibe
- 44: Anlaufscheibe
- 46: Sprengring
- 47: Funktionsfläche
- 48: Ringnut
- 50: Sicherungsring
- 52: Stufe
- 54: Funktionsfläche
- 56: O-Ring

## Patentansprüche

1. Planetengetriebe zum Anbau an einen Elektromotor mit Planetenrädem (10), die in einem den Abtrieb bildenden Planetenträger (8) gelagert sind und die in gleichzeitigem Zahneingriff mit einem Sonnenrad (12) und einem in einem Gehäuse (2) festgelegten Hohlrad (14) sind, wobei das Sonnenrad (12) mit einer drehbaren Sonnenradwelle (4) verbunden ist, auf der ein Lager (28) angeordnet ist, und welche zur Aufnahme einer Abtriebswelle des Elektromotors in einem Aufnahmebereich (16) hohl ausgebildet ist, wobei zwischen der Sonnenradwelle (4) und einem Gehäuse (2) ein Dichtungselement (22) vorgesehen ist, wobei das Lager (28) in einem durch das Dichtungselement (22) nach außen abgedichteten Innenraum des Gehäuses angeordnet ist und ein Innenring des Lagers (2) axial außerhalb des Aufnahmebereichs (16) für die Abtriebswelle des Elektromotors auf einem axialen Abschnitt der Sonnenradwelle (4) mit gegenüber dem Aufnahmebereich (16) reduziertem Außendurchmesser angeordnet ist, **dadurch gekennzeichnet, dass** das Dichtungselement (22) axial außerhalb des Aufnahmebereichs (16) für die Abtriebswelle des Elektromotors in einem axialen Abschnitt der Sonnenradwelle (4) mit gegenüber dem Aufnahmebereich (16) reduziertem Außendurchmesser angeordnet ist.

2. Planetengetriebe nach Anspruch 1, **dadurch gekennzeichnet, dass** die Sonnenradwelle eine Stufe (52) aufweist, an dem ein Innenring des Lagers (28) mit einer Stirnseite anliegt.

3. Planetengetriebe nach Anspruch 1 oder 2, **dadurch gekennzeichnet, dass** der Lageraußenring des Lagers (28) für die Sonnenradwelle im Planetenträger (8) angeordnet ist.

4. Planetengetriebe nach Anspruch 1, 2 oder 3, **dadurch gekennzeichnet, dass** das Lager (28) für die Sonnenradwelle (4) radial innerhalb eines Innenrings eines Planetenträgerlagers (30) und axial wenigstens teilweise innerhalb des vom Planetenträgerlager (30) beanspruchten Bauraums angeordnet ist.

5. Planetengetriebe nach Anspruch 3 oder 4, **dadurch gekennzeichnet, dass** im Planetenträger (8) eine Ringnut (48) zur Aufnahme eines Sprengrings (46) vorhanden ist, die axial an eine den Lageraußenring des Lagers (28) für die Sonnenradwelle aufnehmende Funktionsfläche (47) angrenzt, und dass der Lageraußenring durch den Sprengring (46) gegen axiale Verschiebung in eine Richtung gesichert ist.

6. Planetengetriebe nach einem der Ansprüche 1 bis 5 **dadurch gekennzeichnet, dass** der Planetenträger (8) beidseits jedes Planetenrades (10) durchgehende Bohrungen (34, 36) zur Aufnahme eines Planetenlagerbolzens (38) aufweist, auf dem das Planetenrad (10) drehbar gelagert ist, und dass der Planetenlagerbolzen (38) mit seinen Stirnflächen an Lagerinnenringe von Planetenträgerlagern (30, 32) angrenzt, so dass der Planetenlagerbolzen (38) gegen axiale Verschiebung gesichert ist.

7. Planetengetriebe nach einem der Ansprüche 1 bis 6, **dadurch gekennzeichnet, dass** die Sonnenradwelle (4) axial verschieblich gegen die Kraftwirkung eines elastischen Ausgleichselements (56) gelagert ist.

8. Planetengetriebe nach Anspruch 7, **dadurch gekennzeichnet, dass** das elastische Ausgleichselement axial zwischen einer dem Sprengring (46) gegenüberliegenden Stirnfläche des Lageraußenrings und einer Funktionsfläche (54) des Planetenträgers (8) angeordnet ist.

9. Planetengetriebe nach Anspruch 7 oder 8, **dadurch gekennzeichnet, dass** das elastische Ausgleichselement ein O-Ring (56) aus Gummi ist.

10. Planetengetriebe nach einem der Ansprüche 1 bis 5, **dadurch gekennzeichnet, dass** die Sonnenradwelle (4) zum Gehäuse (2) axial unverschieblich gelagert ist und dass zwischen der Sonnenradwelle (4) und der Abtriebswelle des Elektromotors eine Federscheibenkupplung angeordnet ist, um axiale Verschiebungen auszugleichen.

## Claims

1. Planetary transmission for fitting to an electric motor with planet gears (10) which are mounted in a planet carrier (8) forming the output drive and are simultaneously in mesh with a sun gear (12) and a ring gear (14) fixed in a casing (2), wherein the sun gear (12) is connected to a rotatable sun gear shaft (4) on which a bearing (28) is disposed and which is of hollow formation for holding a driven shaft of the electric motor in a holding region (16), wherein a sealing element (22) is provided between the sun gear shaft (4) and a casing (2), wherein the bearing (28) is disposed in an interior space of the casing which is sealed to the outside by the sealing element (22), and an inner race of the bearing (28) is disposed axially outside of the holding region (16) for the driven shaft of the electric motor on an axial portion of the sun gear shaft (4) having an outside diameter which is reduced with respect to the holding region (16), **characterised in that** the sealing element (22) is disposed axially outside of the holding region (16) for the driven shaft of the electric motor in an axial portion of the sun gear shaft (4) having an outside diameter which is reduced with respect to the holding region (16).

2. Planetary transmission according to Claim 1, **characterised in that** the sun gear shaft comprises a step (52) against which an inner race of the bearing (28) lies by way of an end side.

3. Planetary transmission according to Claim 1 or 2, **characterised in that** the outer race of the bearing (28) for the sun gear shaft is disposed in the planet carrier (8).

4. Planetary transmission according to Claim 1, 2 or 3, **characterised in that** the bearing (28) for the sun gear shaft (4) is disposed radially inside an inner race of a planet carrier bearing (30) and at least partly axially inside the construction space taken up by the planet carrier bearing (30).

5. Planetary transmission according to Claim 3 or 4, **characterised in that** a ring groove (48) is provided in the planet carrier (8) for holding a circlip (46), this groove axially adjoining a functional face (47) holding the outer race of the bearing (28) for the sun gear shaft, and that the bearing outer race is secured against axial displacement in one direction by the circlip (46).

6. Planetary transmission according to any one of Claims 1 to 5, **characterised in that** the planet carrier (8) comprises through-bores (34, 36) on both sides of each planet gear (10) for holding a planetary bearing pin (38) on which the planet gear (10) is rotatably mounted, and that the planetary bearing pin (38) adjoins inner races of planet carrier bearings (30, 32) by way of its end faces, so that the planetary bearing pin (38) is secured against axial displacement.

7. Planetary transmission according to any one of Claims 1 to 6, **characterised in that** the sun gear shaft (4) is mounted such that it can be axially displaced against the action of force of a resilient compensating element (56).

8. Planetary transmission according to Claim 7, **characterised in that** the resilient compensating element is disposed axially between an end face of the bearing outer race which lies opposite the circlip (46) and a functional face (54) of the planet carrier. (8) .

9. Planetary transmission according to Claim 7 or 8, **characterised in that** the resilient compensating element is an O-ring (56) of rubber.

10. Planetary transmission according to any one of Claims 1 to 5, **characterised in that** the sun gear shaft (4) is mounted such that it is axially fixed relative to the casing (2), and that a spring washer coupling is disposed between the sun gear shaft (4) and the driven shaft of the electric motor in order to compensate for axial displacements.

## Revendications

1. Train d'engrenage épicycloïdal destiné à être relié à un moteur électrique, avec des pignons satellites (10), logés dans un porte-satellites (8) constituant la sortie et qui sont en engrènement simultané avec une roue planétaire (12) et une couronne à denture intérieure (14), fixée dans un carter (2), dans lequel la roue planétaire (12) est reliée à un arbre de roue planétaire rotatif (4) sur lequel se trouve un palier (28), et qui est creux pour le logement d'un arbre de sortie du moteur électrique dans un espace de logement (16), un élément d'étanchéité (22) étant prévu entre l'arbre de roue planétaire (4) et un carter (2), le palier (28) étant disposé dans l'espace intérieur du carter, étanchéifié vis-à-vis de l'extérieur à l'aide de l'élément d'étanchéité (22) et une bague interne du plier (2) étant disposée axialement à l'extérieur de l'espace de logement (16) pour l'arbre de sortie du moteur électrique sur une partie axiale de l'arbre de la roue planétaire (4) avec un diamètre extérieur réduit par rapport à l'espace de logement (16), **caractérisé en ce que** l'élément d'étanchéité (22) est disposé axialement à l'extérieur de l'espace de logement (16) pour l'arbre de sortie du moteur électrique dans une partie axiale de l'arbre de la roue planétaire (4) avec un diamètre extérieur réduit par rapport à l'espace de logement (16).

2. Train d'engrenage épicycloïdal selon la revendication 1, **caractérisé en ce que** l'arbre de la roue planétaire comprend un épaulement (52) sur lequel s'appuie une bague interne du palier (28) avec une face frontale.

3. Train d'engrenage épicycloïdal selon la revendication 1 ou 2, **caractérisé en ce que** la bague de support externe du palier (28) pour l'arbre de la roue planétaire est disposée dans le porte-satellites (8).

4. Train d'engrenage épicycloïdal selon la revendication 1, 2 ou 3, **caractérisé en ce que** le palier (28) pour l'arbre de la roue planétaire (4) est disposé radialement à l'intérieur d'une bague interne d'un palier de porte-satellites (30) et axialement au moins partiellement à l'intérieur de l'espace occupé par le palier du porte-satellites (30).

5. Train d'engrenage épicycloïdal selon la revendication 3 ou 4, **caractérisé en ce que**, dans le porte-satellites (8), se trouve une rainure annulaire (48) pour le logement d'un circlips (46) qui s'appuie axialement sur une surface fonctionnelle (47) qui loge la bague de support externe du palier (28) pour l'arbre de la roue planétaire, et **en ce que** la bague externe de support est bloquée par le circlips (46) pour empêcher un déplacement axial dans une direction.

6. Train d'engrenage épicycloïdal selon l'une des revendications 1 à 5, **caractérisé en ce que** le porte-satellites (8) comprend, des deux côtés de chaque pignon satellite (10), des alésages traversants (34, 36) pour le logement d'une tige de palier du pignon satellite (38) sur laquelle le pignon satellite (10) est logé de manière rotative, et **en ce que** la tige de palier du pignon satellite (38) s'appuie, avec ses faces frontales sur les bagues de support internes des paliers des porte-satellites (30, 32), de façon à ce que la tige de palier du pignon satellite (38) soit bloquée pour empêcher un déplacement axial.

7. Train d'engrenage épicycloïdal selon l'une des revendications 1 à 6, caractérsé en ce que l'arbre de la roue planétaire (4) est bloqué axialement contre l'action d'une force à l'aide d'un élément de compensation élastique (56).

8. Train d'engrenage épicycloïdal selon la revendication 7, **caractérisé en ce que** l'élément de compensation élastique est disposé axialement entre la face frontale de la bague externe du palier opposée au circlips (46) et une surface fonctionnelle (54) du porte-satellites (8).

9. Train d'engrenage épicycloïdal selon la revendication 7 ou 8, **caractérisé en ce que** l'élément de compensation élastique est un joint torique (56) en caoutchouc.

10. Train d'engrenage épicycloïdal selon l'une des revendications 1 à 5, **caractérisé en ce que** l'arbre de la roue planétaire (4) est logé de manière fixe axialement par rapport au carter (2) et **en ce que**, entre l'arbre de la roue planétaire (4) et l'arbre de sortie du moteur électrique, se trouve un embrayage à disques élastiques afin de compenser des déplacements axiaux.
